(19) **Europäisches Patentamt / European Patent Office / Office européen des brevets**

(11) **EP 4 597 032 A1**

(12) **EUROPEAN PATENT APPLICATION**
published in accordance with Art. 153(4) EPC

(43) Date of publication:
06.08.2025 Bulletin 2025/32

(21) Application number: 23872225.0

(22) Date of filing: 25.09.2023

(51) International Patent Classification (IPC):
*G01C 9/06* (2006.01)    *G01C 15/00* (2006.01)
*G01C 19/00* (2013.01)    *G01B 7/30* (2006.01)

(52) Cooperative Patent Classification (CPC):
G01B 7/30; G01C 9/06; G01C 15/00; G01C 19/00

(86) International application number:
PCT/JP2023/034632

(87) International publication number:
WO 2024/071000 (04.04.2024 Gazette 2024/14)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 29.09.2022 JP 2022156075

(71) Applicant: TOPCON CORPORATION
Tokyo 174-8580 (JP)

(72) Inventors:
• OHTOMO Fumio
Asaka-shi, Saitama 351-0035 (JP)
• OSARAGI Kazuki
Tokyo 174-8580 (JP)
• DOHMOTO Takeshi
Tokyo 174-8580 (JP)
• KUMAGAI Kaoru
Tokyo 174-8580 (JP)
• SHOJI Naoki
Tokyo 174-8580 (JP)

(74) Representative: Louis Pöhlau Lohrentz
Patentanwälte
Merianstrasse 26
90409 Nürnberg (DE)

(54) **ROTARY OPERATION TYPE INERTIAL DETECTING DEVICE, AND SURVEYING DEVICE**

(57) A rotational operation type inertia detecting device comprises an inertia detecting unit (4) provided in an inside of an inner frame, wherein the inner frame is supported to an outer frame via a first shaft (5), and the inertia detecting unit is supported to the inner frame via a second shaft (7) orthogonal to the first shaft, a first encoder (12) provided on the first shaft, a second encoder (17) provided on the second shaft, a rotary power provided for each shaft, and an arithmetic processing module (19) configured to control the each rotary power based on a detection result from the inertia detecting unit, wherein the arithmetic processing module is configured to associate a signal generated by the inertia detecting unit and outputs of the first encoder and the second encoder, to continuously rotate the inertia detecting unit with respect to the second shaft, to calculate a horizontal rotation angle of the inner frame and a rotation angle with respect to horizontality of the second shaft from a detection signal of the inertia detecting unit, to perform a rotation operation by 180° for the inner frame at least once with respect to the first shaft, and to detect a tilt angle with respect to verticality of the outer frame and a horizontal rotation angle.

EP 4 597 032 A1

# FIG.1

**Description**

TECHNICAL FIELD

The present invention relates to a rotational operation type inertia detecting device using an inertial sensor, and a surveying instrument including the rotational operation type inertia detecting device.

BACKGROUND ART

A tilt detecting device is provided in a surveying instrument to level a device or to measure a tilt of a device.

There are tilt sensors which use a tilt of a free liquid level or a motion of air bubble enclosed in a liquid as a tilt detecting device for detecting a high precise horizontality and a minute tilt. Alternatively, there are acceleration sensors as a tilt detecting device for detecting dynamic tilt with high responsiveness.

Tilt sensors have detected horizontality with high precision, but have exhibited poor responsiveness and have been difficult to be used for dynamic devices. Further, recent acceleration sensors have been composed of Micro Electro Mechanical System (MEMS) and have guaranteed high responsiveness, but the acceleration sensors have had problems of lack of stability due to a drift caused by environmental changes (temperature, atmospheric pressure, humidity, and the like) or temporal changes.

On the other hand, recently, there have been also gyro sensors composed of MEMS and there are also sensors formed by integrating a gyro sensor and an acceleration sensor. Similar to acceleration sensors, the gyro sensors for detecting a rotation also have a problem of lack of stability due to a manufacturing offset and due to a drift caused by environmental changes (temperature, atmospheric pressure, humidity, and the like) or temporal changes.

PRIOR ART REFERENCES

PATENT DOCUMENT

Patent Document 1: Patent Publication JP-B-6541365
Patent Document 2: Patent Publication JP-A-2016-151423
Patent Document 3: Patent Publication JP-A-2017-090244
Patent Document 4: Patent Publication JP-A-2017-106813
Patent Document 5: Patent Publication JP-A-2018-028464

SUMMARY OF THE INVENTION

PROBLEM TO BE SOLVED BY THE INVENTION

It is an object of the present invention to provide a rotational operation type inertia detecting device and a surveying instrument including the rotational operation type inertia detecting device, capable of eliminating offset or drift of inertial sensors, such as an acceleration sensor or a gyro sensor and of guaranteeing stability.

MEANS FOR SOLVING THE PROBLEM

The present invention relates to a rotational operation type inertia detecting device which comprises an inner frame provided in an inside of an outer frame, an inertia detecting unit including an inertial sensor configured to detect a tilt with respect to horizontality and a rotation provided in an inside of the inner frame, wherein the inner frame is rotatably supported to the outer frame via a first shaft, and the inertia detecting unit is rotatably supported to the inner frame via a second shaft orthogonal to the first shaft, a first encoder provided on the first shaft and configured to detect a rotation angle between the outer frame and the inner frame, a second encoder provided on the second shaft and configured to detect a rotation angle between the inner frame and the inertia detecting unit, a rotary power provided for each shaft so as to rotate each shaft, and an arithmetic processing module configured to drive and control the each rotary power based on a detection result from the inertia detecting unit, wherein the arithmetic processing module is configured to associate a signal generated by the inertia detecting unit and outputs of the first encoder and the second encoder, to continuously rotate the inertia detecting unit with respect to the second shaft, to calculate a horizontal rotation angle of the inner frame and a rotation angle with respect to horizontality of the second shaft from a detection signal of the inertia detecting unit based on a detection angle of the second encoder, to perform a rotation operation by 180° for the inner frame at least once with respect to the first shaft, and to detect a tilt angle with respect to verticality of the outer frame and a horizontal rotation angle.

Further, the present invention relates to the rotational operation type inertia detecting device, wherein the arithmetic processing module is configured to control the rotary power provided on the first shaft such that the inner frame becomes horizontal based on a detection signal of the inertia detecting unit.

Further, the present invention relates to the rotational operation type inertia detecting device, wherein the arithmetic processing module is configured to perform a rotation operation by 180° at least once with respect to the first shaft when the outer frame is in a stationary state or a constant velocity state, to detect a vertical angle and a horizontal rotation angle based on a detection signal output by the inertia detecting unit before and after rotation, and when the outer frame is moving, to calculate a vertical angle and a horizontal rotation angle according to changes of a rotation detection results of the inertial sensor with reference to the vertical angle and the horizontal rotation angle.

Further, the present invention relates to a surveying instrument which comprises any one of the above-described rotational operation type inertia detecting device, a distance measuring module configured to perform electronic distance measurement, an optical axis deflector configured to deflect a distance measuring optical axis and to direct a distance measuring light to a measuring point, a measuring direction detector configured to detect a direction of the distance measuring optical axis, and an arithmetic control module.

Further, the present invention relates to the surveying instrument, wherein the arithmetic control module is configured to control the optical axis deflector based on an output result of the rotational operation type inertia detecting device and to control a rotation of a scan pattern formed based on a deflection action of the distance measuring optical axis of the optical axis deflector.

Further, the present invention relates to the surveying instrument, wherein a reference optical axis of the distance measuring optical axis is directed to a forward direction of movement of the surveying instrument, and the arithmetic control module is configured to control the optical axis deflector such that the scan pattern is repeatedly performed at a predetermined time interval, to perform distance measurement by the distance measuring module, to calculate a difference before and after repetition distance measurement with respect to a forward plane, and to determine a movement speed of the surveying instrument.

Furthermore, the present invention relates to the surveying instrument, wherein the optical axis deflector includes two disk prisms continuously rotated, and is configured such that a mass $\times$ a rotation speed of one disk prism is substantially equal to a mass $\times$ a rotation speed of other disk prism.

EFFECTS OF THE INVENTION

According to the present invention, the rotational operation type inertia detecting device comprises an inner frame provided in an inside of an outer frame, an inertia detecting unit including an inertial sensor configured to detect a tilt with respect to horizontality and a rotation provided in an inside of the inner frame, wherein the inner frame is rotatably supported to the outer frame via a first shaft, and the inertia detecting unit is rotatably supported to the inner frame via a second shaft orthogonal to the first shaft, a first encoder provided on the first shaft and configured to detect a rotation angle between the outer frame and the inner frame, a second encoder provided on the second shaft and configured to detect a rotation angle between the inner frame and the inertia detecting unit, a rotary power provided for each shaft so as to rotate each shaft, and an arithmetic processing module configured to drive and control the each rotary power based on a detection result from the inertia detecting unit, wherein the arithmetic processing module is configured to associate a signal generated by the inertia detecting unit and outputs of the first encoder and the second encoder, to continuously rotate the inertia detecting unit with respect to the second shaft, to calculate a horizontal rotation angle of the inner frame and a rotation angle with respect to horizontality of the second shaft from a detection signal of the inertia detecting unit based on a detection angle of the second encoder, to perform a rotation operation by 180° for the inner frame at least once with respect to the first shaft, and to detect a tilt angle with respect to verticality of the outer frame and a horizontal rotation angle. As a result, it is possible to eliminate an offset or a drift of an inertial sensor and to stably detect a tilt and a rotation.

Further, according to the present invention, the arithmetic processing module is configured to control the rotary power provided on the first shaft such that the inner frame becomes horizontal based on a detection signal of the inertia detecting unit. As a result, it is possible to detect a horizontal rotation angle without being affected by horizontal changes of the outer frame.

Further, according to the present invention, the surveying instrument comprises any one of the above-described rotational operation type inertia detecting device, a distance measuring module configured to perform electronic distance measurement, an optical axis deflector configured to deflect a distance measuring optical axis and to direct a distance measuring light to a measuring point, a measuring direction detector configured to detect a direction of the distance measuring optical axis, and an arithmetic control module. As a result, it is possible to detect a tilt and a rotation angle with respect to horizontality of the surveying instrument.

Further, according to the present invention, the arithmetic control module is configured to control the optical axis deflector based on an output result of the rotational operation type inertia detecting device and to control a rotation of a scan pattern formed based on a deflection action of the distance measuring optical axis of the optical axis deflector. As a result, even in surveying involving movement, the surveying instrument can measure with a scan pattern with a predetermined reference, for instance, with a scan pattern with a vertical reference.

Further, according to the present invention, a reference optical axis of the distance measuring optical axis is directed to a forward direction of movement of the surveying instrument, and the arithmetic control module is configured to control the optical axis deflector such that the scan pattern is repeatedly performed at a predetermined time interval, to perform distance measurement by the distance measuring module, to calculate a difference before and after repetition distance measurement with respect to a forward plane, and to determine a movement speed of the surveying instrument. As a result, it is possible to determine a moving distance during continuous movement.

Furthermore, according to the present invention, the optical axis deflector includes two disk prisms continuously rotated, and is configured such that a mass × a rotation speed of one disk prism is substantially equal to a mass × a rotation speed of other disk prism. As a result, it is possible to perform stable measurement even when a surveying instrument is installed unstable.

BRIEF DESCRIPTION OF DRAWINGS

FIG.1 is a schematic plan view diagram showing a rotational operation type inertia detecting device according to an embodiment of the present invention.
FIG.2 is a schematic structure diagram of the rotational operation type inertia detecting device.
FIG.3 is a schematic diagram of an inertial sensor provided in the rotational operation type inertia detecting device.
FIG.4A, FIG.4B, FIG.4C, and FIG.4D are explanatory diagrams showing posture states of an inertial sensor at a time of pitching reversals and at a time of rolling reversals.
FIG.5 is a diagram showing pitching reversal operations and rolling reversal operations in time series.
FIG.6 is a diagram showing pitching reversal operations and rolling continuous rotation operations in time series and also showing an output state of an acceleration sensor at a time of rolling continuous rotation operations.
FIG.7A is a drawing showing relationship between a tilt and a horizontal rotation of an inner frame in a state where a Y-axis of the inner frame is horizontally leveled, and FIG.7B is a drawing showing an example of a vector synthesis of reversal values $\Delta\kappa$, $\Delta\gamma$ based on a gyro sensor output.
FIG.8 is a schematic structure diagram of a surveying instrument including the rotational operation type inertia detecting device.
FIG.9A is a drawing showing a relationship between a scan pattern and horizontality with respect to an image in a measuring direction, FIG. 9B is a drawing showing a state where a scan pattern is corrected to a horizontal reference, and FIG.9C is a drawing showing images and scan patterns in a measuring direction in time series when a surveying instrument moves.
FIG.10A is a drawing showing a portion where distance measurement values are equal to one another when an object is scanned, and FIG.10B is a drawing in which portions where distance measurement values are equal to one another are extracted and a drawing showing a relationship between a previous scan and a current scan when a surveying instrument moves.

MODE(S) FOR CARRYING OUT THE INVENTION

A description will be given below on embodiments of the present invention by referring to attached drawings.

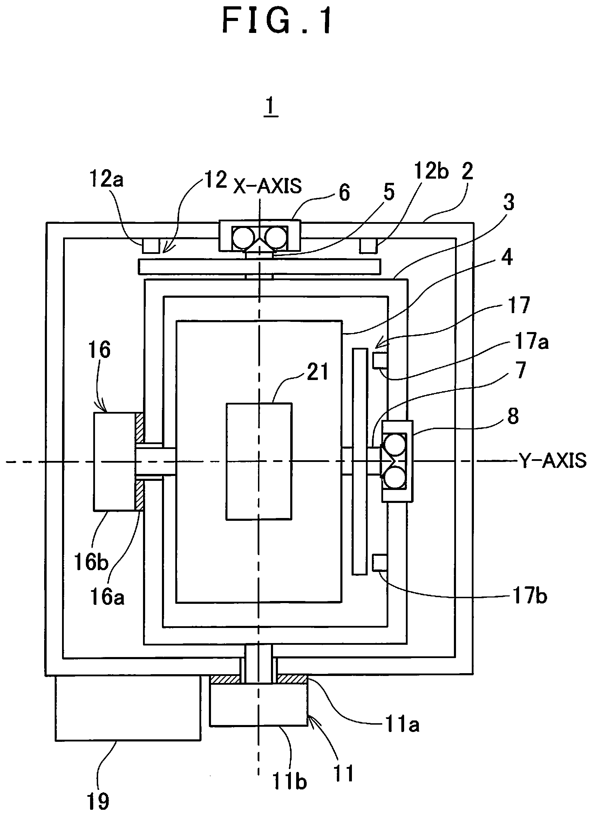

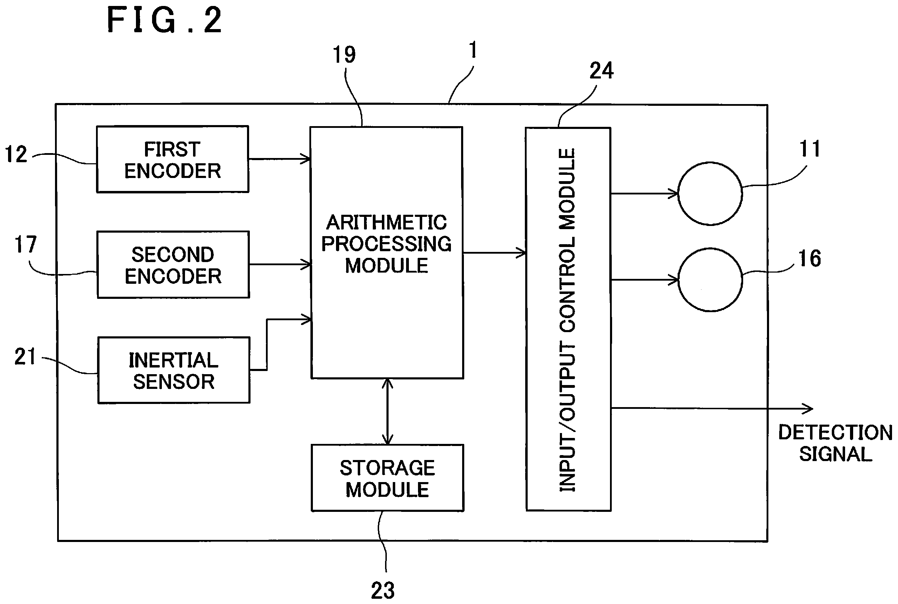

FIG.1 and FIG.2 are schematic diagrams of a rotational operation type inertia detecting device according to an embodiment of the present invention.

FIG.1 is a schematic plan view diagram showing a rotational operation type inertia detecting device 1 according to an embodiment of the present invention, and FIG.2 is a schematic structure diagram of the rotational operation type inertia detecting device 1 according to the embodiment. Further, in descriptions with reference to FIG.1, an upper side of FIG.1 is described as an upper side of the rotational operation type inertia detecting device 1, and a left side of FIG.1 is described as a left side of the rotational operation type inertia detecting device 1, for convenience.

A rectangular framed-shaped inner frame 3 is provided in an inside of a rectangular framed-shaped outer frame 2, an inertia detecting unit 4 is provided in an inside of the inner frame 3, and an inertial sensor 21 is provided on the inertia detecting unit 4.

The inertial sensor 21 is an integral-type inertial sensor including a triaxial acceleration sensor and a gyro sensor, and is integrally composed of MEMS. Therefore, signals output from the inertial sensor 21 include a detection signal from the triaxial acceleration sensor and a detection signal from the gyro sensor.

When the rotational operation type inertia detecting device 1 is provided in a device (target device) (not shown) of which a tilt is to be detected, the outer frame 2 is attached to a structural member, such as a frame of a target device.

A first shaft 5 is provided in a protruding state from an upper side of the inner frame 3, and a first encoder 12 is provided on the first shaft 5. The first shaft 5 is rotatably supported with respect to the outer frame 2 via a bearing 6 provided in the outer frame 2, and the inner frame 3 is rotatable with respect to the outer frame 2.

A first rotary driving force (hereinafter, referred to as a first motor 11) is provided on a lower side of the outer frame 2.

The first motor 11 is an outer rotor type motor. By fixing an inner part 11a to the outer frame 2, an outer part 11b of the first motor 11 and the first shaft 5 are integrally rotated and by being driven by the first motor 11, the outer frame 2 and the inner frame 3 are relatively rotated.

The first encoder 12 includes two detectors 12a and 12b on right and left sides in the drawing, and is configured to detect a rotation angle of the inner frame 3 with respect to the outer frame 2 (relative rotation angle between the inner frame 3 and the outer frame 2).

A second shaft 7 is provided in a protruding state from a right side of the inertia detecting unit 4, and a second encoder 17 is provided on the second shaft 7. The second shaft 7 is rotatably supported with respect to the inner frame 3 via a bearing 8 provided in the inner frame 3, and the inertia detecting unit 4 is rotatable around the second shaft 7.

Here, an axis of the first shaft 5 and an axis of the second shaft 7 are configured to be orthogonal to each other. Further, to be described later, an axis of the first shaft 5 is an X-axis and an axis of the second shaft 7 is a Y-axis.

A second rotary driving force (hereinafter, referred to as a second motor 16) is provided on a left side of the inner frame 3, and a rotational shaft of the second motor 16 is fixed to a left side of the inertia detecting unit 4.

The second motor 16 is an outer rotor type motor. By fixing an inner part 16a to the inner frame 3, an outer part 16b of the second motor 16 and the second shaft 7 are integrally rotated and by being driven by the second motor 16, the inner frame 3 and the inertia detecting unit 4 are relatively rotated.

The second encoder 17 includes two detectors 17a and 17b on upper and lower sides in the drawing, and is configured to detect a rotation angle of the inertia detecting unit 4 with respect to the inner frame 3 (relative rotation angle between the inertia detecting unit 4 and the inner frame 3).

It is to be noted that, as the first encoder 12 and the second encoder 17, an encoder (angle measuring accuracy: 10" or less) used for angle measurement in general surveying instruments may be used.

Further, a motor used as the first rotary driving force or the second rotary driving force may be a motor of a type in which a rotational shaft rotates with respect to a motor body, and may be enough to generate relative rotation respectively between the outer frame 2 and the inner frame 3 and between the inner frame 3 and the inertia detecting unit 4.

The first encoder 12 and the second encoder 17 are electrically connected to an arithmetic processing module 19, and the first encoder 12 and the second encoder 17 output detection results to the arithmetic processing module 19.

The inertial sensor 21 is electrically connected to the arithmetic processing module 19. As described above, the inertial sensor 21 has the acceleration sensor and the gyro sensor built in, and signals output by the inertial sensor 21 include an acceleration detection signal from the acceleration sensor and an angular velocity detection signal from the gyro sensor and are respectively input into the arithmetic processing module 19 as detection signals of the inertial sensor 21. The arithmetic processing module 19 associates outputs of the first encoder 12 and the second encoder 17 with signals which the inertial sensor 21 outputs.

The acceleration sensor of the inertial sensor 21 is configured to detect accelerations in total of three axial directions, that is, accelerations of two horizontal axes (X-axis and Y-axis) orthogonal to each other and an acceleration of one vertical axis (Z-axis) orthogonal to the two horizontal axes (vertical to the drawing sheet) and to output an acceleration signal in each three axial directions.

The gyro sensor of the inertial sensor 21 is configured to detect angular velocities regarding the two horizontal axes (X-axis and Y-axis) and an angular velocity regarding the vertical axis (Z-axis) orthogonal to the two horizontal axes (vertical to the drawing sheet).

Here, the two horizontal axes correspond to the first shaft 5 and the second shaft 7 shown in FIG.1. A rotation (tilt) around the first shaft 5 corresponds to pitching, a rotation (tilt) around the second shaft 7 corresponds to rolling, and a rotation around the vertical axis corresponds to yawing.

A description will be further given on the rotational operation type inertia detecting device 1 by referring to FIG.2.

The rotational operation type inertia detecting device 1 includes the first encoder 12, the second encoder 17, the inertial sensor 21, the arithmetic processing module 19, the first motor 11, and the second motor 16, and further includes a storage module 23 and an input/output control module 24.

As the arithmetic processing module 19, a CPU specialized for this embodiment, or such as a general-purpose CPU, an embedded CPU is used, and a time measuring means, such as a clock generator, is built in the arithmetic processing module 19. Further, as the storage module 23, a semiconductor memory, such as a RAM or a ROM, is used.

The storage module 23 stores various types of programs. These programs include an arithmetic program for detecting a tilt and rotation of the inertia detecting unit 4 with respect to the outer frame 2, a program for eliminating an offset and a drift of the inertial sensor 21, and a program for driving and controlling the first motor 11 and the second motor 16. Further, the storage module 23 stores various types of data such as arithmetic data (that is, detected acceleration data, tilt angle data, angular velocity data and rotation angle data).

The input/output control module 24 drives the first motor 11 and the second motor 16 based on a control command output from the arithmetic processing module 19 and outputs data regarding a tilt angle data and a rotation calculated by the arithmetic processing module 19 as a detection signal.

The arithmetic processing module 19 calculates a tilt angle and a tilt direction based on a detection result from the acceleration sensor of the inertial sensor 21 by being associated with a rotation angle detected by the first encoder 12 and a rotation angle detected by the second encoder 17, and also calculates a rotation angle based on a detection result from the gyro sensor of the inertial sensor 21.

It is to be noted that, the outer frame 2 and the inertial sensor 21 are mechanistically associated each other by an output of the first encoder 12 and an output of the second encoder 17, and are set to indicate a rotation angle from a predetermined reference angle (for instance, 0° of rotation angles).

Meanwhile, the inertial sensor 21 (the acceleration sensor and the gyro sensor) includes a manufacturing offset and is subject to a drift due to environmental changes (such as temperature, atmospheric pressure, humidity) or temporal changes.

A description will be given below on an elimination of an offset and a drift of a rotational operation type inertia detecting device 1 in this embodiment.

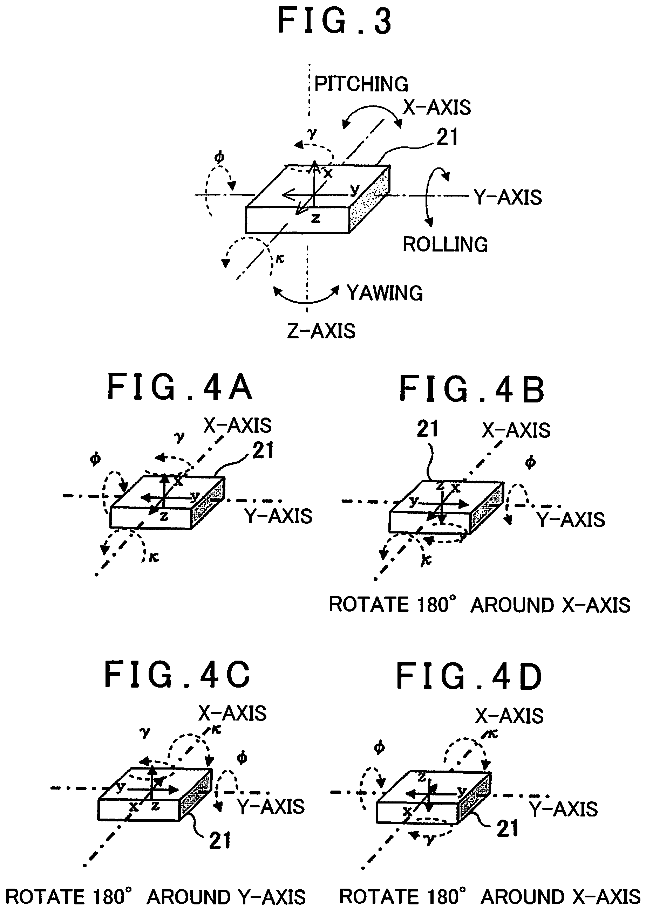

FIG.3 is a diagram schematically showing the inertial sensor 21 extracted from FIG.1.

In FIG.3, an X-axis corresponds to the first shaft 5 and a Y-axis corresponds to the second shaft 7, and a vertical axis with respect to a plane including the X-axis and the Y-axis corresponds to a Z-axis. Further, a rotation around the X-axis corresponds to pitching, a rotation around the Y-axis corresponds to rolling, and a rotation around the Z-axis corresponds to yawing.

Further, arrows x, y and z shown in the inertial sensor 21 indicate accelerating directions detected by the acceleration sensor of the inertial sensor 21, and x, y and z respectively correspond to X, Y and Z-axes, and the acceleration sensor outputs acceleration signals corresponding to three axes. Further, arrows φ, κ and y indicate rotation directions detected by the gyro sensor of the inertial sensor 21, and the gyro sensor outputs angular velocity signals of pitching (φ), rolling (κ) and yawing (γ). It is to be noted that, acceleration and angular velocity output by the inertial sensor 21 mean acceleration and angular velocity output by the inertia detecting unit 4.

In the present embodiment, since a motor and an encoder are coupled to each of X-axis and Y-axis, the inertia detecting unit 4 can be forcibly and accurately reversed, that is, accurately rotated by 180° or continuously rotated (continuously rotated by 180°), with respect to each of the X-axis and the Y-axis. Further, a reversal and a rotation are set to speeds sufficiently faster than environmental changes, for instance, 0.1 to 10 rpm, so as not to be affected by environmental changes.

FIG.4A, FIG.4B, FIG.4C, and FIG.4D show posture states of the inertial sensor 21 with respect to the target device.

FIG.4A shows a state when starting an operation of the inertial sensor 21, and at the starting time, outputs of the first encoder 12 and the second encoder 17 (a rotation angle around an X-axis, a rotation angle around a Y-axis) and outputs of the inertial sensor 21 (acceleration sensor: x, y, z, gyro sensor: φ, κ, γ) are measured.

Next, when the inertial sensor 21 pitching-reverses by 180° around the X-axis (FIG.4B) and further rolling-reverses by 180° around the Y-axis (FIG.4C), a front and a rear, and a right and a left of the inertia detecting unit 4 are reversed. Next, when the inertial sensor 21 pitching-reverses by 180° around the X-axis (FIG.4D) and further rolling-reverses by 180° around the Y-axis, the inertia detecting unit 4 returns to an original posture state (posture state when starting the operation) (FIG.4A).

FIG.4C shows a posture state of the inertial sensor 21 biaxial-reversed in two axes (X-axis and Y-axis) from the posture state of the inertial sensor 21 shown in FIG.4A.

With respect to the acceleration sensor of the inertial sensor 21, when the inertial sensor 21 is biaxially reversed and a difference between outputs of the acceleration sensor of the inertial sensor 21 before and after the biaxial reversal operation is taken, an offset and a long-term drift component of the acceleration sensor are eliminated, and a two-fold tilt angle difference due to an output difference of the acceleration sensor is obtained. Here, the long-term drift means a drift caused by temporal changes in a structure, and environmental changes such as temperature and atmospheric pressure.

Next, with respect to the gyro sensor, by taking a difference of φ and y of the gyro sensor of the inertial sensor 21 before and after a reversal operation in the reversal operation from a posture state shown in FIG.4A to a posture state shown in FIG.4B, a difference of κ and y of the gyro sensor before and after a reversal operation in the reversal operation from a posture state shown in FIG.4B to a posture state shown in FIG.4C, a difference of φ and γ of the gyro sensor before and after a reversal operation in the reversal operation from a posture state shown in FIG.4C to a posture state shown in FIG.4D, and a difference of κ and y of the gyro sensor before and after a reversal operation in the reversal operation from a posture state shown in FIG.4D to a posture state shown in FIG.4A, it is possible to eliminate an offset and a long-term drift component for each of φ, κ, and y of the gyro sensor, and to obtain a two-fold angular velocity. It is to be noted that, an average value before and after a reversal operation means an offset and a long-term drift component.

As described above, by a difference before and after a reversal operation, an offset and a long-term drift component are eliminated with regard to each of the acceleration sensor and the gyro sensor of the inertial sensor 21, and two-fold detection sensitivity is obtained.

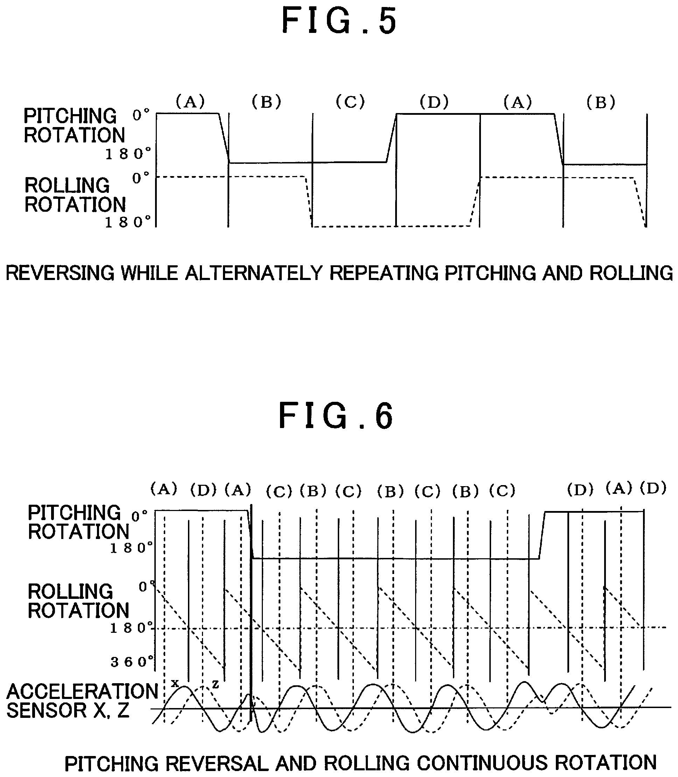

FIG.5 shows pitching reversal operations and rolling reversal operations shown in FIG.4 on a time-series basis, and shows an example of alternately repeating pitching reversal operations and rolling reversal operations (biaxial switching reversal operation).

The above-description has described that pitching reversal operations and rolling reversal operations are intermittently repeated and an offset and a long-term drift component are eliminated, but it is also possible to eliminate an offset and a long-term drift component by performing intermittent reversal operation of any one of the pitching (X-axis) or the rolling (Y-axis) and continuous rotation of the other.

FIG.6 shows an example of performing switching reversal operations with respect to pitching (rotating around an X-axis) and performing continuous rotation operations at constant speed with respect to rolling (rotating around a Y-axis).

In FIG.6, with respect to the pitching and the rolling, angular changes are respectively detected by the first encoder 12 and the second encoder 17.

Due to continuous rotation of rolling at constant speed, outputs x and z of the acceleration sensor become sinusoidal outputs from which a phase is deviated by approximately 90°.

In FIG.6, an output x of the acceleration sensor is shown by a solid sine wave and an output z of the acceleration sensor is shown by a dashed sine wave. The arithmetic processing module 19 is capable of determining (maximum position-minimum value) /2 of each of outputs x and z of the acceleration sensor, and a position of (maximum position-minimum value)/2 indicates a horizontal position with respect to rolling.

Further, sine waves of outputs x and z of the acceleration sensor are reversed by switching reversal operations of pitching (180° rotation) . With regard to an output y of the acceleration sensor, the arithmetic processing module 19 compares values before and after switching reversal, and an offset and a long-term drift component of the output y can be eliminated, or a correction value of the output y can be determined.

Therefore, the arithmetic processing module 19 controls pitching such that an output y of the acceleration sensor is 0. That is, the arithmetic processing module 19 controls the first motor 11 such that a Y-axis becomes horizontal (including a substantially horizontal state). Furthermore, the arithmetic processing module 19 reverses pitching by 180° based on an output of the first encoder 12 and determines an offset of the output y (reversal 1/2 of an average of the outputs y before and after reversal), and corrects a horizontal value of pitching.

The arithmetic processing module 19 detects an angle of the second encoder 17 at a point of (maximum position-minimum value) /2 of outputs x and z of the acceleration sensor, and is capable of determining a tilt angle of the inner frame 3 with respect to horizontality (tilt angle of an X-axis with respect to horizontality) from rolling continuous rotation at constant speed.

Further, with regard to the gyro sensor, the arithmetic processing module 19 obtains differences (reversal values $\Delta\kappa$ and $\Delta\gamma$) respectively at a time of 180° reversal with respect to outputs $\kappa$ and y of the gyro sensor of the inertial sensor 21 based on a detection output of the second encoder 17. Furthermore, the arithmetic processing module 19, by performing vector synthesis of the reversal values $\Delta\kappa$ and $\Delta\gamma$, is capable of eliminating an offset and a long-term drift component of the gyro sensor and of obtaining pitching angular velocity and yawing angular velocity with twice detection sensitivity, and of obtaining a rotation angle through time integration.

Since a Y-axis of the inner frame 3 is controlled to become horizontal based on a signal from the inertial sensor 21, a horizontal rotation can be detected without being affected by horizontal changes of the outer frame 2.

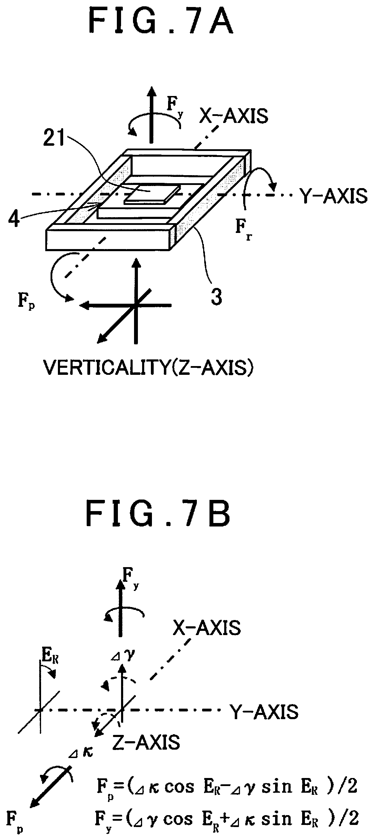

FIG.7 shows a relationship between a tilt and a horizontal rotation of the inner frame 3 in a state where a Y-axis of the inner frame 3 is horizontally leveled based on an output of the inertia detecting unit 4.

FIG.7A shows a relationship between a tilt (pitching Fp, rolling Fr) and a horizontal rotation (yawing Fy) of the inner frame 3 with respect to verticality.

FIG.7B shows an example of a vector synthesis of reversal values $\Delta\kappa$ and $\Delta\gamma$ with regard to the gyro sensor outputs $\kappa$ and y of the inertial sensor 21. Accuracy of detection ER of the second encoder 17 is accurate and thus an angular velocity indicated by an accurate vector synthesis (pitching Fp, yawing Fy) is obtained.

[Equation 1]

$$F_p = (\Delta\kappa\cos E_R - \Delta\gamma\sin E_R)/2$$
$$F_y = (\Delta\gamma\cos E_R + \Delta\kappa\sin E_R)/2$$

In a keeping state of pitching horizontal leveling (state where a Y-axis is horizontally maintained), it is possible to detect a horizontal position (to detect a rolling horizontal position) during rolling continuous rotation, and it is possible to determine a posture (a tilt angle and a tilt direction) of the outer frame 2 with respect to horizontality based on a detection angle of the first encoder 12 and a detection angle of the second encoder 17 when detecting this horizontal position (that is, the inertial sensor 21 is in a horizontal state). Further, it is possible to obtain a horizontal rotation (rotation around a Z-axis) based on a gyro output from the gyro sensor.

Here, the gyro sensor detects a rotational change in inertial space, meanwhile the acceleration sensor detects a tilt on the ground. Further, it is possible for both the gyro sensor and the acceleration sensor to detect a tilt change.

Rolling horizontal position detection during pitching horizontal leveling keeping and rolling continuous rotation equivalently enables rotation detection by the gyro sensor in a horizontal state, and stable horizontal rotation detection (yawing Fy) is obtained. It is to be noted that, the rolling rotation in this case also serves as a removing function of an offset and a long-term drift component of the inertial sensor 21 and as a detecting function of a rolling horizontal position.

It is to be noted that, this method (rolling horizontal position detection during pitching horizontal leveling keeping and rolling continuous rotation) can also be applied while moving by performing reversal of an output y of the acceleration sensor and the pitching correction arithmetic when the outer frame 2 is stationary (or at constant velocity). For instance, horizontal control of pitching while moving is constantly controlled using rotation detection of pitching based on an output of the gyro sensor instead of the acceleration sensor output y.

Further, a stationary state and a moving state can be determined by the arithmetic processing module 19 based on an output from the inertial sensor 21.

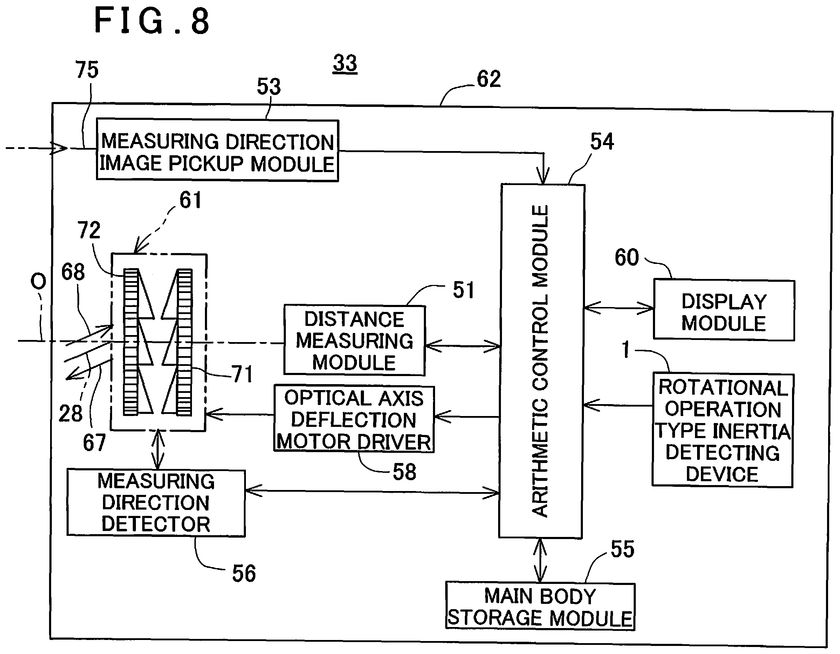

Next, a description will be given on instruments to which the above-mentioned rotational operation type inertia detecting device 1 is applied. FIG.8 shows a case where the rotational operation type inertia detecting device 1 is applied to a surveying instrument 33.

The surveying instrument 33 may be held by hand, supported by a monopod or tripod, or may be mounted on a mobile vehicle or an aircraft. Further, it is also possible to mount singly the rotational operation type inertia detecting device 1 in the mobile vehicle, the aircraft, or the like for the purpose of posture control. The rotational operation type inertia detecting device 1 can be applied to various instruments according to purposes or uses.

The surveying instrument 33 mainly includes a distance measuring module 51, a measuring direction image pickup module 53, an arithmetic control module 54, a main body storage module 55, the rotational operation type inertia detecting device 1, a measuring direction detector 56, an optical axis deflection motor driver 58, a display module 60, and an optical axis deflector 61. These are accommodated in a casing 62 and integrated.

Further, the outer frame 2 of the rotational operation type inertia detecting device 1 is fixed to the casing 62 or fixed to a structural member fixed to the casing 62, and is integrated with the casing 62, that is, the surveying instrument 33. A detection result of the rotational operation type inertia detecting device 1 is input into the arithmetic control module 54.

As the arithmetic control module 54, such as a CPU specialized for the present embodiment, a general-purpose CPU or a built-in CPU is used, and a time measuring means is built in the arithmetic control module 54. Further, a semiconductor memory or the like is used as the main body storage module 55. Further, a part of functions of the arithmetic control module 54 may be assigned as the arithmetic processing module 19.

In the main body storage module 55, various types of programs are stored. These programs include programs for performing the present embodiment, for instance, a distance measurement program, an image processing program, and an optical axis deflection control program, programs for performing a calibration of the rotational operation type inertia detecting device 1, and programs for data processing. The arithmetic control module 54 develops and performs the stored programs. Further, in the main body storage module 55, various types of data such as measurement data and image data are stored.

The arithmetic control module 54 controls the optical axis deflector 61 via the optical axis deflection motor driver 58. Further, the arithmetic control module 54 controls a deflection of a distance measuring optical axis 28 via the optical axis deflector 61, and performs synchronous control of the distance measuring module 51 and the measuring direction image pickup module 53, and substantial synchronization (timing matching) with regard to measurement and control of the rotational operation type inertia detecting device 1, and the like.

The optical axis deflector 61 is arranged on the distance measuring optical axis 28. A straight optical axis transmitting through a center of the optical axis deflector 61 is a reference optical axis O. The reference optical axis O coincides with the distance measuring optical axis 28 when not deflected by the optical axis deflector 61, and has a predetermined relationship with respect to the casing 62.

It is to be noted that, as the optical axis deflector 61, optical axis deflectors disclosed in Patent Document 2, Patent Document 3 and Patent Document 4 are capable of applying.

Brief description will be given below on the optical axis deflector 61.

The optical axis deflector 61 includes a pair of disk prisms 71 and 72 composed of optical prisms. The disk prisms 71 and 72 are disk-shaped (or polygonal circumscribing a circle) having a mass and a diameter suitable for their respective uses, and are disposed orthogonally and concentrically with respect to the distance measuring optical axis 28 on the distance measuring optical axis 28, and are disposed in parallel to each other at a predetermined interval. The disk prisms 71 and 72 are provided rotatably around the reference optical axis O, respectively. Each of the disk prisms 71 and 72 is configured to be individually and independently rotated by motors, respectively. The motors are driven by the optical axis deflection motor driver 58, and configured such that, via the optical axis deflection motor driver 58, a rotation angle, a rotation direction, a rotation speed, a rotation ratio, and the like of the disk prisms 71 and 72 are controlled by the arithmetic control module 54 via the optical axis deflector 61.

Controlling rotations of the disk prisms 71 and 72 enables the distance measuring optical axis 28 to deflect at any arbitrary angles from 0° to the maximum deflection angle (for instance, ±30°) with reference to the reference optical axis O. Furthermore, by individual control of the disk prisms 71 and 72, the arithmetic control module 54 can scan a distance measuring light in arbitrary pattern and can perform distance measurement in arbitrary scan pattern.

The distance measuring module 51 has a function as an electronic distance meter, projects a distance measuring light 67 to a measuring point or an object, receives reflected distance measuring light 68 from the measuring point or the object, and performs electronic distance measurement based on a round-trip time (flight time) of a distance measuring light. A distance measurement result of the distance measuring module 51 is input into the arithmetic control module 54.

The arithmetic control module 54 can scan the distance measuring light 67 in a two-dimensional pattern by continuously rotating the disk prisms 71 and 72 at a predetermined rotation ratio, while continuously irradiating with the distance measuring light 67. Further, a point cloud data along a scan locus can be obtained by pulse-emitting the distance measuring light 67 and measuring a distance for each pulsed light.

Here, when a measurement by the surveying instrument 33 involves movement of the surveying instrument 33 itself, the movement of the surveying instrument 33 makes the continuously rotating disk prisms 71 and 72 to generate Coriolis forces.

Therefore, if the surveying instrument 33 is used in an unstable supporting state, for instance, if the surveying instrument 33 is held by hand or if the surveying instrument 33 is mounted in a mobile vehicle, an aircraft, or the like, the generation of Coriolis force causes instability in measurement.

For this reason, in the present embodiment, rotations of the two disk prisms 71 and 72 constituting the optical axis deflector 61 are controlled by the arithmetic control module 54 so as to cancel generation of Coriolis force.

By the arithmetic control module 54, the disk prism 71 and the disk prism 72 are reversely rotated each other, and further a mass and a rotation speed of each disk prism 71 and 72 are set such that the mass × the rotation speed (or the mass × angular velocity) of the disk prism 71 is equal or substantially equal to the mass × the rotation speed (or the mass × angular velocity) of the disk prism 72.

By setting such that the mass × the rotation speed (or the mass × angular velocity) of the disk prism 71 is equal or substantially equal to the mass × the rotation speed (or the mass × angular velocity) of the disk prism 72 and by reversing the rotations, Coriolis force can be canceled.

For instance, by setting a ratio of (the mass × the rotation speed of the disk prism 71 and the mass × the rotation speed of the disk prism 72) to approximately 1 (0.7 to 1.5), an effect of Coriolis force can be substantially eliminated.

The measuring direction detector 56 detects respective rotation angles of the disk prisms 71 and 72, and detects a measuring direction of the distance measuring optical axis 28, that is, a deflection angle and a deflecting direction of the distance measuring optical axis 28 with respect to the reference optical axis O in real time. Therefore, an angle and a direction of the distance measuring optical axis 28 with respect to the reference optical axis O during distance measurement is able to be detected (angle measurement).

A measuring direction detection result (angle measurement result) of the measuring direction detector 56 is associated with a distance measurement result and is input into the arithmetic control module 54, and the arithmetic control module 54 associates and stores the distance measurement result, the angle measurement result, and a detection result of the rotational operation type inertia detecting device 1 in the main body storage module 55.

The measuring direction image pickup module 53 has a known relationship with the reference optical axis O, that is, an image pickup optical axis 75 of the measuring direction image pickup module 53 is parallel to the reference optical axis O and a distance between optical axes is already-known. Further, the measuring direction image pickup module 53 is a camera with a field angle larger than a maximum deflection angle (for instance, ±30°) of the optical axis deflector 61 and obtains image data including a maximum deflection range by the optical axis deflector 61. Further, the measuring direction image pickup module 53 is capable of obtaining a moving image or continuous image. Image data obtained by the measuring direction image pickup module 53 are input into the arithmetic control module 54.

Pixels of the measuring direction image pickup module 53 are a CCD or a CMOS sensor, which are aggregations of pixels and a position of each pixel on an image element can be identified. For instance, the pixel has an orthogonal coordinate system with the image pickup optical axis 75 as an origin point, and a position of each the pixel is identified by a pixel coordinate in the orthogonal coordinate system. Further, the pixel coordinate is converted to an angular coordinate in relationship with the field angle (pixel position × field angle / number of vertical and horizontal pixels corresponding to the field angle) and is associated with the measuring direction detection results of the measuring direction detector 56. It is to be noted that, one axis (for instance, pixel y-axis) of the orthogonal coordinate system is set to coincide with verticality when the measuring direction image pickup module 53 is in a state of a horizontal posture, and another orthogonal axis (for instance, pixel x-axis) is set to coincide with horizontality.

The arithmetic control module 54 determines a tilt angle (vertical angle) and a horizontal rotation angle with respect to the horizontality of the reference optical axis O and the measuring direction image pickup module 53 based on a detection result of the rotational operation type inertia detecting device 1. As a result, it is also possible to determine horizontal reference three-dimensional coordinates of the point cloud data along the scan locus, and is also possible to associate the three-dimensional coordinates of the point cloud data with the pixel coordinates.

The display module 60 displays an image obtained by the measuring direction image pickup module 53, the scan locus, a measurement state, a measurement result, and the like. It is to be noted that, the display module 60 may be used as a touch panel that also serves as an operation module.

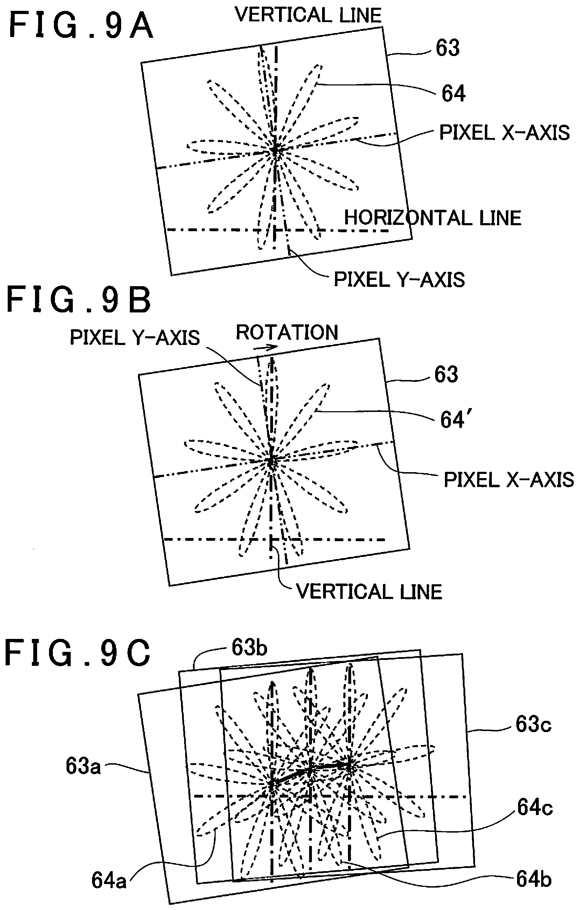

FIG.9A, FIG.9B, and FIG.9C show an image 63 displayed on the display module 60, and the image 63 is a synthetic image of an image obtained by the measuring direction image pickup module 53 and the scan locus (scan pattern 64). In the image 63, a pixel x-axis and a pixel y-axis of a pixel are displayed as required, and also a vertical line and a horizontal line obtained from a detection result of the rotational operation type inertia detecting device 1 are shown.

In FIG.9A, a pixel y-axis is rotated on the left with respect to a vertical line, and FIG.9A shows that the image 63 is obtained in a state where the surveying instrument 33 is tilted to the left with respect to the verticality (or horizontality).

A tilt angle of the surveying instrument 33 with respect to the verticality (or horizontality) is detected by the rotational operation type inertia detecting device 1.

A posture (direction) of the scan pattern 64 shown in FIG.9A is coincident with a pixel x-axis and a pixel y-axis of a pixel.

Therefore, the scan pattern 64 is rotated on the left with respect to the vertical line (or horizontal line).

The arithmetic control module 54, by changing a rotation timing (rotation phase) of the disk prisms 71 and 72 via the optical axis deflection motor driver 58, rotates a scan pattern and is able to change a direction of the scan pattern 64.

FIG.9B shows a state where the arithmetic control module 54 determines a tilt (rotation) relationship between the pixel y-axis and a vertical line, rotates the scan pattern 64 rightward, and controls a direction of scan pattern 64' such that the direction (posture) of the scan pattern 64 is coincide with a vertical line.

FIG.9C shows superimposed images 63a, 63b, and 63c obtained in time series while moving of the surveying instrument 33, and shows scan patterns 64a, 64b, and 64c obtained by performing a scan synchronized with the image obtaining.

The arithmetic control module 54 obtains in real time detection results of the rotational operation type inertia detecting device 1 when obtaining the images 63a, 63b, and 63c, and by correcting directions of scan patterns 64 performed when obtaining the images 63a, 63b, and 63c based on the detection results, the arithmetic control module 54 always performs a scan with reference to a vertical line, and obtains the scan patterns 64 of a direction coincident with the vertical line.

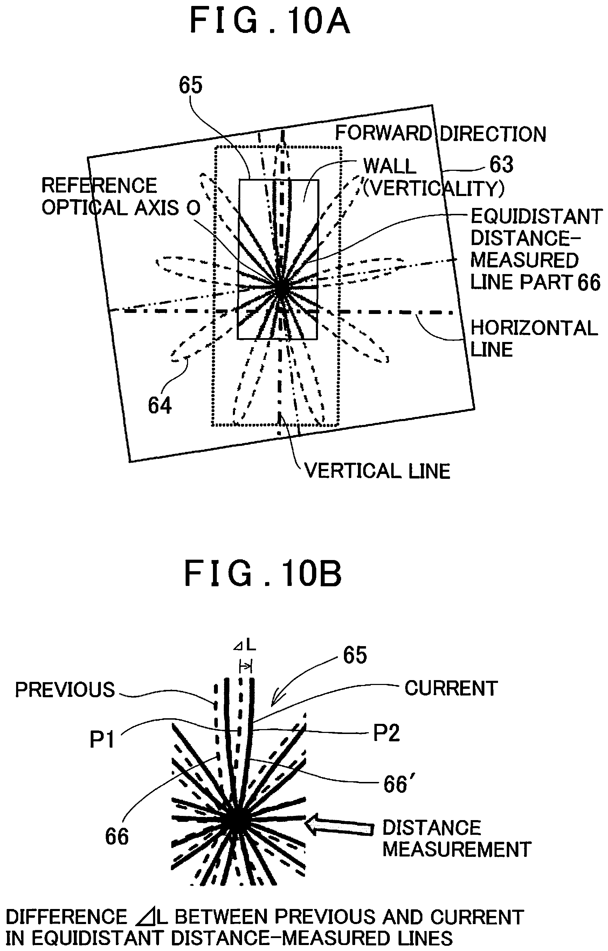

FIG.10 shows an example of calculating a moving position by the surveying instrument 33 mounted in a mobile vehicle (not shown) .

As shown in FIG.10A, a reference optical axis O of the distance measuring optical axis is directed to a forward direction, and scans are repeated at a predetermined time interval (Ts). A distance measured part 65 which becomes a substantially equal distance in one scan (scan locus part of which a distance measuring distance is equal in scan parts such as a vertical wall in the drawing (equidistant distance-measured line part 66)) is extracted.

Next, as shown in FIG.10B, with regard to the distance measured part 65, a difference (ΔL) between the previous equidistant distance-measured line part 66 repeatedly subjected to distance measurement, and a current equidistant distance-measured line part 66' is calculated, and a movement speed (ΔL/Ts) of the surveying instrument 33 is determined based on the difference (ΔL) and the time interval (Ts).

All differences regarding positions between arbitrary measuring points in the previous equidistant distance-measured line part 66 and measuring points corresponding to the arbitrary measuring points in the current equidistant distance-measured line part 66' (that is, points of which deflecting directions detected respectively by the measuring direction detector 56 in the equidistant distance-measured line part 66 and in the equidistant distance-measured line part 66' are same) are substantially same ΔL, and with regard to the measuring point in the equidistant distance-measured line part 66, movement speeds (ΔL/Ts) are substantially same. Therefore, by determining (ΔL/Ts) with regard to all measuring points in the equidistant distance-measured line part 66 or the predetermined number of measuring points and by averaging movement speed, it is possible to improve accuracy and reliability.

Further, by determining a vertical angle and a horizontal angle at any time based on an output of the rotational operation type inertia detecting device 1, it is possible to determine a moving position.

It is to be noted that, a correspondence relationship of scan locus accompanying movement is obtained by determining a previous scan position and a current scan position respectively based on detection results of the rotational operation type inertia detecting device 1 and by comparing between the previous scan position and the current scan position. It is to be noted that, the obtained image may be used together when determining a correspondence relationship of scan locus accompanying movement.

In the embodiment of the surveying instrument 33 described above, although a tilt with respect to horizontality and a horizontal rotation angle are obtained from a detection result of the rotational operation type inertia detecting device 1 and a distance is obtained from a distance measurement result of the distance measuring module 51, with regard to positional information of the surveying instrument 33, a GNSS may be provided in the surveying instrument 33, and the positional information from the GNSS and a detection result of the rotational operation type inertia detecting device 1 may be combined with each other.

LEGEND OF REFERENCE NUMERALS

1      Rotational operation type inertia detecting device
2      Outer frame
3      Inner frame
4      Inertia detecting unit
11     First motor
12     First encoder
16     Second motor

17    Second encoder
19    Arithmetic processing module
21    Inertial sensor
23    Storage module
33    Surveying instrument
51    Distance measuring module
53    Measuring direction image pickup module
54    Arithmetic control module
55    Main body storage module
61    Optical axis deflector

**Claims**

1. A rotational operation type inertia detecting device comprising:
an inner frame provided in an inside of an outer frame, an inertia detecting unit including an inertial sensor configured to detect a tilt with respect to horizontality and a rotation provided in an inside of said inner frame, wherein said inner frame is rotatably supported to said outer frame via a first shaft, and said inertia detecting unit is rotatably supported to said inner frame via a second shaft orthogonal to said first shaft, a first encoder provided on said first shaft and configured to detect a rotation angle between said outer frame and said inner frame, a second encoder provided on said second shaft and configured to detect a rotation angle between said inner frame and said inertia detecting unit, a rotary power provided for each shaft so as to rotate each shaft, and an arithmetic processing module configured to drive and control said each rotary power based on a detection result from said inertia detecting unit, wherein said arithmetic processing module is configured to associate a signal generated by said inertia detecting unit and outputs of said first encoder and said second encoder, to continuously rotate said inertia detecting unit with respect to said second shaft, to calculate a horizontal rotation angle of said inner frame and a rotation angle with respect to horizontality of said second shaft from a detection signal of said inertia detecting unit based on a detection angle of said second encoder, to perform a rotation operation by 180° for said inner frame at least once with respect to said first shaft, and to detect a tilt angle with respect to verticality of said outer frame and a horizontal rotation angle.

2. The rotational operation type inertia detecting device according to claim 1, wherein said arithmetic processing module is configured to control said rotary power provided on said first shaft such that said inner frame becomes horizontal based on a detection signal of said inertia detecting unit.

3. The rotational operation type inertia detecting device according to claim 1, wherein said arithmetic processing module is configured to perform a rotation operation by 180° at least once with respect to said first shaft when said outer frame is in a stationary state or a constant velocity state, to detect a vertical angle and a horizontal rotation angle based on a detection signal output by said inertia detecting unit before and after rotation, and when said outer frame is moving, to calculate a vertical angle and a horizontal rotation angle according to changes of a rotation detection results of said inertial sensor with reference to said vertical angle and said horizontal rotation angle.

4. A surveying instrument comprising: the rotational operation type inertia detecting device according to any one of claims 1 to 3, a distance measuring module configured to perform electronic distance measurement, an optical axis deflector configured to deflect a distance measuring optical axis and to direct a distance measuring light to a measuring point, a measuring direction detector configured to detect a direction of said distance measuring optical axis, and an arithmetic control module.

5. The surveying instrument according to claim 4, wherein said arithmetic control module is configured to control said optical axis deflector based on an output result of said rotational operation type inertia detecting device and to control a rotation of a scan pattern formed based on a deflection action of said distance measuring optical axis of said optical axis deflector.

6. The surveying instrument according to claim 5, wherein a reference optical axis of said distance measuring optical axis is directed to a forward direction of movement of said surveying instrument, and said arithmetic control module is configured to control said optical axis deflector such that said scan pattern is repeatedly performed at a predetermined time interval, to perform distance measurement by said distance measuring module, to calculate a difference before and after repetition distance measurement with respect to a forward plane, and to determine a movement speed of said surveying instrument.

7. The surveying instrument according to claim 4, wherein said optical axis deflector includes two disk prisms continuously rotated, and is configured such that a mass × a rotation speed of one disk prism is substantially equal to a mass × a rotation speed of other disk prism.

# FIG.1

# FIG.2

FIG.2 — Block diagram showing FIRST ENCODER (12), SECOND ENCODER (17), and INERTIAL SENSOR (21) connected to ARITHMETIC PROCESSING MODULE (19). The ARITHMETIC PROCESSING MODULE connects to STORAGE MODULE (23) and INPUT/OUTPUT CONTROL MODULE (24), which outputs to two circular elements (11, 16) and a DETECTION SIGNAL. Overall system labeled 1.

EP 4 597 032 A1

# FIG.3

# FIG.4A

# FIG.4B

ROTATE 180° AROUND X-AXIS

# FIG.4C

ROTATE 180° AROUND Y-AXIS

# FIG.4D

ROTATE 180° AROUND X-AXIS

# FIG.5

REVERSING WHILE ALTERNATELY REPEATING PITCHING AND ROLLING

# FIG.6

PITCHING REVERSAL AND ROLLING CONTINUOUS ROTATION

# FIG.7A

VERTICALITY(Z-AXIS)

# FIG.7B

$$F_p = (\Delta\kappa \cos E_R - \Delta\gamma \sin E_R)/2$$
$$F_y = (\Delta\gamma \cos E_R + \Delta\kappa \sin E_R)/2$$

# FIG.8

EP 4 597 032 A1

# FIG.9A

VERTICAL LINE

63

64

PIXEL X-AXIS

HORIZONTAL LINE

PIXEL Y-AXIS

# FIG.9B

PIXEL Y-AXIS     ROTATION

63

64′

PIXEL X-AXIS

VERTICAL LINE

# FIG.9C

63b

63c

63a

64c

64a

64b

# FIG.10A

65

FORWARD DIRECTION

REFERENCE
OPTICAL AXIS O

WALL
(VERTICALITY)

63

EQUIDISTANT
DISTANCE-
MEASURED
LINE PART 66

HORIZONTAL
LINE

64

VERTICAL LINE

# FIG.10B

ΔL

65

PREVIOUS

CURRENT

P1

P2

66'

66

DISTANCE
MEASUREMENT

DIFFERENCE ΔL BETWEEN PREVIOUS AND CURRENT
IN EQUIDISTANT DISTANCE-MEASURED LINES

## INTERNATIONAL SEARCH REPORT

| International application No. |
|---|
| **PCT/JP2023/034632** |

**A.    CLASSIFICATION OF SUBJECT MATTER**

*G01C 9/06*(2006.01)i; *G01C 15/00*(2006.01)i; *G01C 19/00*(2013.01)i; *G01B 7/30*(2006.01)i
FI:    G01C9/06 E; G01B7/30 Z; G01C15/00 105S; G01C19/00 Z

According to International Patent Classification (IPC) or to both national classification and IPC

**B.    FIELDS SEARCHED**

Minimum documentation searched (classification system followed by classification symbols)

G01C9/06; G01C15/00; G01C19/00; G01B7/30; G01C21/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-63761 A (TOPCON CORP) 22 April 2021 (2021-04-22)<br>entire text | 1-7 |
| A | JP 4-142088 A (TOKIMEC INC) 15 May 1992 (1992-05-15)<br>entire text | 1-7 |
| A | JP 2007-155584 A (JAPAN AGENGY FOR MARINE-EARTH SCIENCE &<br>TECHNOLOGY) 21 June 2007 (2007-06-21)<br>entire text | 1-7 |
| A | JP 2014-232096 A (FREESCALE SEMICONDUCTOR INC) 11 December 2014 (2014-12-11)<br>entire text | 1-7 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034632**

| Patent document cited in search report | | | Publication date (day/month/year) | Patent family member(s) | | | Publication date (day/month/year) |
|---|---|---|---|---|---|---|---|
| JP | 2021-63761 | A | 22 April 2021 | US entire text | 2021/0116241 | A1 | |
| JP | 4-142088 | A | 15 May 1992 | (Family: none) | | | |
| JP | 2007-155584 | A | 21 June 2007 | (Family: none) | | | |
| JP | 2014-232096 | A | 11 December 2014 | US entire text | 2014/0352400 | A1 | |
| | | | | EP | 2808685 | A1 | |
| | | | | CN | 104215274 | A | |

Form PCT/ISA/210 (patent family annex) (January 2015)

**REFERENCES CITED IN THE DESCRIPTION**

**Patent documents cited in the description**

- JP 6541365 B
- JP 2016151423 A
- JP 2017090244 A
- JP 2017106813 A
- JP 2018028464 A